# EUROPEAN PATENT SPECIFICATION

(11) **EP 4 184 389 B1**
(45) Date of publication and mention of the grant of the patent: **07.01.2026**
(21) Application number: 21209049.2
(22) Date of filing: 18.11.2021
(51) Int. Cl.: G06N 3/045, G06N 3/09, G06N 10/20

(54) **DEVICE AND METHOD FOR INDIRECT MEASUREMENT OF TOPOLOGICAL INVARIANTS**
VORRICHTUNG UND VERFAHREN ZUR INDIREKTEN MESSUNG TOPOLOGISCHER INVARIANTEN
DISPOSITIF ET PROCÉDÉ DE MESURE INDIRECTE D'INVARIANTS TOPOLOGIQUES

(43) Date of publication of application: 24.05.2023
(73) Proprietor: Robert Bosch GmbH, 70442 Stuttgart (DE); Instytut Fizyki Polskiej Akademii Nauk, 02-668 Warszawa (PL)
(72) Inventor: Baireuther, Paul Sebastian, 70567 Stuttgart (DE); Hyart, Timo, 02-668 Warszawa (PL); Plodzien, Marcin, 02-668 Warszawa (PL)

(56) References cited:
- BALABANOV OLEKSANDR ET AL: "Unsupervised interpretable learning of topological indices invariant under permutations of atomic bands", vol. 2, no. 2, 29 December 2020 (2020-12-29), pages 1 - 12, XP055916410, Retrieved from the Internet <URL:https://iopscience.iop.org/article/10.1088/2632-2153/abcc43> [retrieved on 20220504], DOI: 10.1088/2632-2153/abcc43
- ANNA DAWID ET AL: "Hessian-based toolbox for reliable and interpretable machine learning in physics", ARXIV.ORG, CORNELL UNIVERSITY LIBRARY, 201 OLIN LIBRARY CORNELL UNIVERSITY ITHACA, NY 14853, 4 August 2021 (2021-08-04), XP091028454
- GAO HUANG ET AL: "Snapshot Ensembles: Train 1, get M for free", ARXIV.ORG, CORNELL UNIVERSITY LIBRARY, 201 OLIN LIBRARY CORNELL UNIVERSITY ITHACA, NY 14853, 1 April 2017 (2017-04-01), XP080759975
- PAUL BAIREUTHER ET AL: "Identifying Chern numbers of superconductors from local measurements", ARXIV.ORG, CORNELL UNIVERSITY LIBRARY, 201 OLIN LIBRARY CORNELL UNIVERSITY ITHACA, NY 14853, 13 December 2021 (2021-12-13), XP091121781

## Description

The invention concerns a device and method to indirectly measure information on topological invariants based on measurements of low energy properties of a material. More precisely, an indirect measurement by an ensemble of e.g. artificial neural networks of the modulus (or the modulus and the sign) of topological invariants of one- or multi-dimensional topological superconductors and topological insulators based on local density of states (or local density of states and non-local transport characteristics) is proposed.

### Prior art

Topological materials are characterized by a gap in their band-structure, and discretized (integer) invariants (=numbers), so-called "topological invariants". Some of the invariants are directly related to an electrical conductance at the material's surface and therefore they are easy to measure in experiments. In the case of two-dimensional topological superconductors however, the topological invariant called "Chern number" is related to a thermal conductance which makes it very difficult to measure.

Topological invariants are well defined only in systems of infinite size. In finite size systems one can define local analogs, so-called topological markers. Those markers are continuous real numbers which converge to the discretized topological invariants when spatially averaged over an infinite size system.

Caio et al. "Machine learning assisted measurement of local topological invariants", arXiv preprint arXiv:1901.03346, online available: https://arxiv.org/abs/1901.03346, have claimed that the spatial average of the so-called "winding-marker", which is related to the winding number as described in the earlier paragraph, a topological invariant in one-dimensional systems, can be inferred from the relatively easily accessible local density of states (LDOS) using an artificial neural network.

BALABANOV OLEKSANDR ET AL: "Unsupervised interpretable learning of topological indices invariant under permutations of atomic bands",MACHINE LEARNING: SCIENCE AND TECHNOLOGY,vol. 2, no. 2 29 December 2020 (2020-12-29), pages 1-12, DOI: 10.1088/2632-2153/abcc43Retrieved from the Internet:URL:https://iopscience.iop.org/ article/10.1088/2632-2153/abcc43 [retrieved on 2022-05-04] presents a neural-network based protocol for finding topologically relevant indices that are invariant under transformations between trivial atomic-limit Hamiltonians.

The indirect neural network-based measurements have a problem: Training a neural network requires labeled training data. However, without a feasible way to measure the topological invariant, such as the winding number or the Chern number in the first place, there is also no way to generate labeled training data via measurements.

### Advantages of the invention

The invention has the advantage that it overcomes the lack of labeled training data and allows predictions of measurements with the needed precision for e.g. applications in topological quantum computing.

### Disclosure of the invention

In a first aspect, a computer-implemented method of measurement of desired information on a topological invariant of a material according to the independent claim 1 is proposed, also referred to as method of measurement of a topological invariant in the following. The desired information is either the modulus (=absolute value) or the modulus and the sign of the topological invariant. The method comprises the steps of:
Measuring a or a plurality of low energy properties of the material, in particular local density of states or local density of states and non-local transport characteristics. The local density of states can be measured near the center of the bandgap (integrated over a small energy window) of said material. Preferably, the window is as small as possible, because then the method will be more robust to disorder and material specifics. At the same time, the window should cover enough states (i.e. enough useful information). For very small systems, a preferred window covers approximately 1/3 of the gap. The local density of states describes in material science the density of available (quasi)particle states at a certain spatial position and energy. Afterwards, the measured local density of states, optionally with additional measured low energy properties such as e.g. non-local transport characteristics, is propagated through an ensemble (also called committee) of machine learning systems. Preferably, the machine learning systems differ from each other with respect to e.g. different random initial conditions and/or by bootstrapping (i.e. resampling) the training data. Preferably, the machine learning systems are neural networks. Each of the neural networks determines a prediction vector assigning a weight to each value in a predefined, finite set of values for the desired information on the topological invariant and each of the neural networks was trained to predict these weights depending on the local density of states, and optionally also depending on additional low energy properties. The predefined set of values for the desired information on the topological invariant is a finite set of allowed values that contains the true value of the desired information with high probability. This set can for example be the set of values that occur in the training data. If the prediction is based on the local density of states alone, preferably the desired information is the modulus of the topological invariant. Afterwards, a collective prediction of the topological invariant is determined depending on at least a plurality of the prediction vectors of the ensemble of neural networks.

It is noted, that in finite size disordered systems, instead of topological invariants one can only calculate topological markers. However, these topological markers contain useful information only if they are approximately discretized to an integer, in which case they contain the same information as the topological invariant. While one could predict the topological marker as a regression problem following a similar approach as detailed in this invention, this would only constitute a detour to the direct classification of the topological invariant. Due to this reason in the following we only discuss the prediction of the discrete topological invariant.

In this invention the term physical system refers to a system that is realized in a material.

Based on the local density of states, the absolute value (i.e. the modulus) of the topological invariant can be determined. Based on the local density of states and additional experimentally accessible data, such as non-local transport measurements, the value (including the sign) of the topological invariant can be determined.

Interestingly, the method for measuring the topological invariants can be applied to any topological invariant of materials where the local density of states can be measured. In one- and two-dimensional systems the measurement of the local density of states can be done using scanning tunneling microscopy on the material sample.

Preferably, the collective prediction of the topological invariant is determined by either averaging all prediction vectors of the ensemble of neural networks or by a majority voting depending on the prediction vectors of the ensemble of neural networks. In majority voting, the prediction (i.e. the vote) by each individual network is the value with the largest weight. These votes are then counted and the collective prediction is the value which has the most votes. In case of a tie, the collective prediction can be chosen at random from the values with the most votes or by some other method. The ensemble method returns a single prediction possibly with information about a certainty of the collective prediction.

Preferably, to lower the number of false predictions, collective predictions with certainty below a threshold are discarded. Said threshold is preferably larger than 50%.

In the case of ensemble averaging, preferably the certainty is given by the ratio of the largest average weight divided by the sum of all averaged weights. In the case of majority voting, preferably the certainty is given by the number of votes for the winning prediction divided by the total number of votes.

Preferably, the neural networks are convolutional neural networks. The topological invariants can be the Chern numbers, or some of the other known topological invariants, such as the invariants discussed in [Chiu, Ching-Kai, et al., Rev. Mod. Phys. 88, 035005, https://doi.org/10.1103/RevModPhys.88.035005].

Preferably, the local density of states is measured in one- or multi-dimensional physical systems. In one- and two-dimensional physical systems this can be done using scanning tunneling microscopy. The one- and multi-dimensional physical systems can be "effective systems", which are realized in or on top of three-dimensional substrates.

Preferably, the method is applied to so-called "topological designer platforms" [e.g. Kezilebieke, S., et al., Nature 588, 424-428, https://doi.org/10.1038/s41586-020-2989-y, or Palacio-Morales, A., Science Advances 5, 7, eaav6600, https://doi.org/10.1126/sciadv.aav6600]. Topological designer platforms are man-made systems, in the following also referred to as "topological designer systems" which are designed to have non-trivial topological invariants. In said systems, the effective system sizes are extremely small and the physical properties well controlled.

The method of the first aspect of the invention could be useful for engineering and quality control of topological materials, which can be used as building blocks of topological quantum devices. Such topological quantum devices could for example be building blocks, such as qubits, of topological quantum computers. For this purpose the desired information on the topological invariant is the absolute value of the topological invariant because in two-dimensional superconductors the sign of the topological invariant is not important for the realization of Majorana zero modes, which are the constituents of the qubits. Another potential application of topological superconductors are thermal transport measurements in metrology. For this purpose the desired information on the topological invariant is both the sign and the modulus of the topological invariant. The invention could also be utilized to measure topological invariants of probes of new materials, e.g. to analyze and verify their topological properties.

In a second aspect of the invention, a computer-implemented method of training an ensemble of machine learning systems, for predicting desired information on topological invariants, wherein the desired information is either the modulus or the modulus and the sign of the topological invariant, according to the independent claim 7 is proposed, also referred to as predicting topological invariants in the following. For example, a training of the machine learning systems that constitute the ensemble of the first aspect of the invention. Preferably, the machine learning system is a neural network and/or the method of the second aspect is a computerimplemented method. The method of training comprises the steps of:
Parametrizing a probability distribution over numerical models. Here and in the following, the term "numerical models" refers to mathematical models of physical systems which can be used to calculate properties of said physical systems numerically. These models should be chosen such that they comprise a model describing the material of interest. However, the full set of numerical models can be much larger because the exact model of the material is in general not known.

In general, simulating real physical systems with all their details is infeasible. In the case of gapped topological materials however it is possible to define an exhaustive distribution over numerical models, because the low energy physics of gapped topological materials is reasonably well described by simple models. Under the term low energy physics, that part of physics can be understood which studies phenomena involving energies that are small relative to a characteristic energy scale of the material. For (topological) insulators and superconductors said energy scale is a bandgap which separates occupied from unoccupied states.

Afterwards, a set of numerical models is generated by sampling models via said probability distribution. This sampling can for example be done randomly. Afterwards, low energy properties, in particular local density of states or local density of states and non-local transport characteristics, and corresponding values of the desired information on the topological invariant, in particular the modulus or the modulus and the sign of the topological invariant, are determined using said numerical models. Preferably, said low energy properties and corresponding values of the desired information on the topological invariant are determined from said numerical models by a computer implementation of said numerical models. Afterwards, the determined low energy properties and corresponding values of the desired information on the topological invariant are grouped to a set of training data. If the prediction is done based solely on the local density of states, preferably the desired information is the modulus of the topological invariant. Afterwards, the machine learning system is trained on said training data to predict the values of the desired information on the topological invariant using standard techniques which are typical for the machine learning system. If for example the machine learning system is an artificial neural network this can be stochastic gradient descent minimizing a cost function, such as the categorical cross-entropy, which characterizes how well the neural network represents the unknown distribution which is represented by the training data.

Other aspects of the invention are defined by the independent claims 13,14,15.

Preferred embodiments are defined by the dependent claims.

Embodiments of the invention will be discussed with reference to the following figures in more detail. The figures show:
- Figure 1: a schematic flow diagram of an embodiment of the invention;
- Figure 2: a schematic system of an embodiment of the invention.

### Description of the embodiments

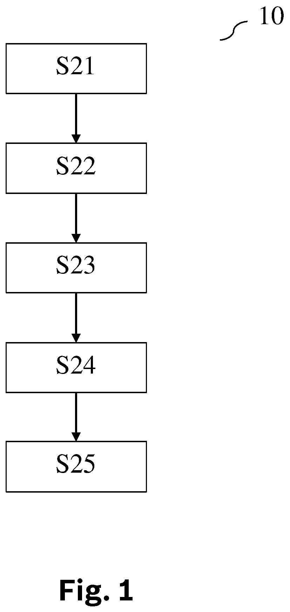

Figure 1 shows a schematic flow diagram 10 of an embodiment of the invention for training a predictor for predicting the value of a desired information on topological invariants, wherein the desired information is the modulus (or the modulus and sign, modulus and sign are then grouped into an integer) of a topological invariant and an application of the trained predictor. Since the allowed values of the topological invariant are discrete, preferably the predictor is a classifier that chooses the most likely value out of a predefined, finite set of values.

The method of Fig. 1 can start with the training of the classifier. For this embodiment, the classifier can be an ensemble of (artificial) neural networks used for indirect measurement of the desired information on the topological invariant, preferably the Chern number. An output of the ensemble can be a weight vector assigning a weight to each value within the predefined set of values. A prediction for the most likely value of the desired information can then be made based on this weight vector by selecting the value with the largest weight.

The numerical generation of training data is an important step of this method, because with this the training of the neural networks which constitute the ensemble and/or the ensemble as a whole can be done without labeled experimental data, which can be unavailable. The training has therefore to be performed using numerically generated data. This is carried out in step S21. In general, simulating real physical systems in all of their properties is infeasible. In the case of (gapped) topological materials however, the so called "low energy physics" is fairly universal - i.e. it can be described reasonably well by simple models. The local density of states near the center of the band gap is such a low energy property. Other low energy properties that can be determined based on the low energy models are for example non-local transport characteristics. It is hence possible to parametrize a distribution over all possible (numerical) models (including disorder). This distribution will then also comprise a model describing the physical systems of interest. The number of required parameters is a measure for the complexity of this distribution. In practice, training on the most general distribution is infeasible. To construct a manageable distribution, one can start from a distribution over idealized models which describe infinite size and disorder free systems, so called "bulk" models. Next, said distribution can be constrained by symmetries, physically motivated constraints, and by fixing some parameters which can be measured in the physical systems of interest. Here is an exemplary list on how to reduce the complexity of the distribution:
a. A (gapped) topological system of practical relevance will have a reasonably large bulk gap. By introducing appropriate inversion and mirror symmetries, the probability density of models with a large bulk gap can be increased substantially.
b. The magnitude of the bulk gap can be bounded from below and above based on measurements on the physical systems of interest.
c. The hopping amplitudes in tight-binding models (and similarly the pairing amplitudes in the case of superconductors) often decay exponentially with the hopping distance. The length-scale on which they decay is a tuning parameter of the training distribution and can to some extent be measured experimentally. The exponential decay of these amplitudes allows for the introduction of a hard cutoff in hopping/pairing distance without much affecting the overall distribution.
d. Another physically motivated constraint in the case of superconductors is to require the average pairing amplitude to be smaller than the average hopping amplitude.

Afterwards, bulk models can be sampled from the probability distribution. These bulk models are then discretized on a lattice of finite size, corresponding to the geometry of the systems the method is going to be applied to. Disorder can then be added to these models. These numerical models are then used to determine local density of states or local density of states and other low energy properties, and corresponding values of the desired information on the topological invariant, in particular the modulus or the modulus and the sign of the topological invariant. It is understood, that the lattice is the lattice of the low energy model and does not have to be identical to the atomic lattice of the material it describes. It can for example be the lattice of a coarse-grained model which is of lower computational complexity than a full atomic-scale model. The local density of states measurement is rescaled (e.g. coarsened) to match the resolution of the numerical model. The local density of states, together with the optional other low energy properties of the material, and the values of the desired information on the topological invariant then are grouped to a training dataset.

After step S22 has been terminated, step S23 follows. Herein, the training of the ensemble is carried out on the simulated training data of step S22. Training of the ensemble follows standard techniques of supervised learning such as (stochastic) gradient descent for each machine learning system, etc. Early stopping can be part of the training.

After step S23 has been terminated, step S24 follows. This step is referred to as challenge in and solution for building a good classifier. In general, in supervised machine learning, one has a training dataset "*A*" sampled from a distribution "*D_{A}*" on which the machine learning system is trained on and a test dataset "*B*" sampled from a distribution *"D_{B}"* on which the trained machine learning system is evaluated (tested) on. Usually *D_{A} = D_{B}.* Since the training minimizes the average error on "*A*", this usually also leads to a low average error on "*B*", converging smoothly as the training progresses. If however, the support of *D_{B}* is only a tiny fraction of the support of *D_{A}*, as is the case in this invention where "A" is a dataset generated using numerical models sampled from a large distribution over models and "B" is a dataset generated using the physical systems of interest, the average error on "*B*" can fluctuate strongly even between adjacent training epochs. This makes it difficult to find a good stopping criterion for the training process. It is therefore imperative to reduce these fluctuations to a minimum. The inventors realized that using an ensemble of machine learning systems can reduce these fluctuations in the test error between training epochs. This is because ensembles can reduce the variance contribution to the generalization error on "*D_{A}*", and thereby the fluctuations in the test error (and hence also in the generalization error on "*D_{B}*") between training epochs. In addition, the collective prediction capability of an ensemble can outperform the prediction capability of any member of the ensemble. Therefore, an ensemble of neural networks is employed that can all be trained individually, but then used collectively to make predictions. Such an ensemble can be constructed in many ways, for example different initial conditions and/or varying the training data. A particularly low cost variant of an ensemble can be generated by using snapshots of the same neural network at different training times as if they were individual neural networks. A collective prediction can then be obtained by simply averaging the prediction vectors over the ensemble or by majority voting. It turns out, that such an ensemble does not only reduce the local variance substantially, i.e. reduces the fluctuations between training epochs, but also outperforms any single neural network instance.

For the above explained steps, there can be done some variations as follows. The symmetries and constraints employed in constructing the training distribution depend strongly on the information available on the physical systems of interest. In general, the more information is available about the physical systems of interest, the more the distribution can be constraint leading to an easier and better training of the classifier and more accurate predictions.

In any real physical system, the shape and size will not be the exact as planned. It can therefore be beneficial to
a. Generate training data from numerical models describing various possible shapes and sizes and then use padding to make the input fit the neural networks' requirements.
b. Same as (a.) but using a more sophisticated neural network that can deal with inputs of different shapes and/or sizes.
c. Introduce (strong) disorder near the system boundary to model rough edges.
d. Select the disorder type and strength based on information about the physical systems of interest.

Further improvements can be given as follows. Away from the boundary, the local density of states (which can be an seen as the "input image" for the neural networks) of topological materials is fairly featureless. Therefore, one could potentially transform the measured "input image" from a physical system in a smart way to fit the input size of a neural network that has been trained on a different system size. For example, by cutting and reconstructing an image of suitable size.

The abstract machine learning task at hand is to classify grey-scale "images" from a test dataset given a training dataset which is sampled from a distribution whose support does include, but is (much) larger then, the support of the distribution from which the test dataset is sampled. Methods where the output contains information about the certainty of the predictions, such as e.g. Bayesian neural networks, can be advantageous.

There are many ways to build neural network ensembles, or more general ensembles of function approximators. For example, one can train multiple neural networks by
a. Choosing different initial conditions.
b. Vary the neural networks' hyper-parameters.
c. Vary the neural networks' architecture
d. Vary the training data
e. Vary the optimization algorithm
f. Snap shots at different training times
g. Any combination of a. - f.

The optimal configuration of the ensemble of neural networks can be found by a separate optimization algorithm, which can optimize over the above-mentioned possible configurations of the neural networks given the simulated training data.

There are many ways to generate a collective prediction from the individual predictions of the ensemble members. For example:
a. Majority voting
b. Averaging the individual prediction vectors
c. Weighted averaging, for example depending on the certainty of the individual predictions.

Additional experimental data could be utilized to improve the predictions. I.e. fed into the classifier which would then have a slightly different architecture. In particular, non-local transport measurements, where one uses two scanning tunneling microscope tips instead of one, could improve predictions in terms of accuracy and by allowing to determine a sign of the topological invariant. In that case, these quantities would also be calculated using the numerical models and become part of the training data.

After the training of the ensemble has been terminated either after step S22 or step S23, an indirect measurement procedure via the ensemble can be carried out. The indirect measurement (also referred to as prediction of the value of the desired information on the topological invariant) starts with step S24. In this step, the local density of states near the center of the band gap (integrated over a small energy window) is measured over the entire physical system. In one- and two-dimensional systems, this can be done by using scanning tunneling microscopy. This results in a grey scale "image" where the pixel corresponds to the local density of states at the corresponding position. Optionally, one can also measure other low energy properties.

Preferably, a normalization of the local density of states is performed. This is beneficial because using scanning tunneling microscopy one can typically measure the local density of states up to an unknown prefactor. For example, the normalization can be such that the local density of states is rescaled to have unit variance over the entire "image". Preferably, the mean value is not shifted, because "zero" carries an important meaning in the local density of states.

After step S24 has been terminated, the subsequent step S25 is carried out. Herein, this "image", optionally together with the other measured low energy properties, is then input to the trained ensemble of neural networks which returns a prediction of the value of the desired information on the topological invariant, in particular on the Chern number. Convolutional neural networks can be advantageous because the input has the same structure as a grey scale image and because the same local patterns can occur at different positions in the local density of states "image". Each neural network returns a "prediction vector" assigning a weight to each value in a set of predefined values for the desired information on the topological invariant, in particular on the Chern number, such that all weights are nonnegative and that their sum is one. The prediction vector hence resembles a probability distribution. The predefined set of values for the desired information on the topological invariant, in particular on the Chern number, is a finite set of allowed values that contains the true value of the desired information with high probability. This set can be constructed to be the set the values occurring in the training data or based on knowledge about the physical systems of interest. In general, the absolute value of the Chern number can be any non-negative integer. An upper bound can be set manually based on physical knowledge. A choice for the upper bound could for example be based on Chern numbers that occur in the computer simulated training data. The prediction vectors are then used to make a collective prediction by either averaging all prediction vectors, such that a collective prediction vector is obtained or by a majority voting, returning a single prediction possibly with some information about the "certainty" of the vote.

In an additional (optional) step, one can discard the predictions of low certainty, thereby substantially reducing the likelihood of misclassification. Due to fundamental considerations, the absolute value of the Chern number can only be determined statistically from the local density of states. This is because for a given local density of states image, one can construct models with different absolute values of the Chern numbers that lead to the same local density of states image. It therefore makes sense to introduce a "certainty threshold" and consider only those predictions where the ensemble is "confident". For example, if the ensemble predicts a probability distribution over a predefined finite set of absolute values for the Chern number, it can be advantageous to set this threshold to be at least 0.5. By setting a threshold >>0.5, the prediction accuracy can be increased further at the expense of fewer predictions. This is very beneficial from a practical point of view, because one can simply discard samples (i.e. realizations of physical systems) where a "confident" prediction is not possible. Here it is again beneficial to use an ensemble rather than a single network. In a single network, the weights can be skewed to unrealistically high values due to overfitting. In an ensemble, overfitting is reduced and therefore the weights resemble the true probabilities more closely.

Finally, the predicted value of the desired information on the topological invariant, in particular the Chern number, is returned. Optionally, together with information about the certainty of the prediction.

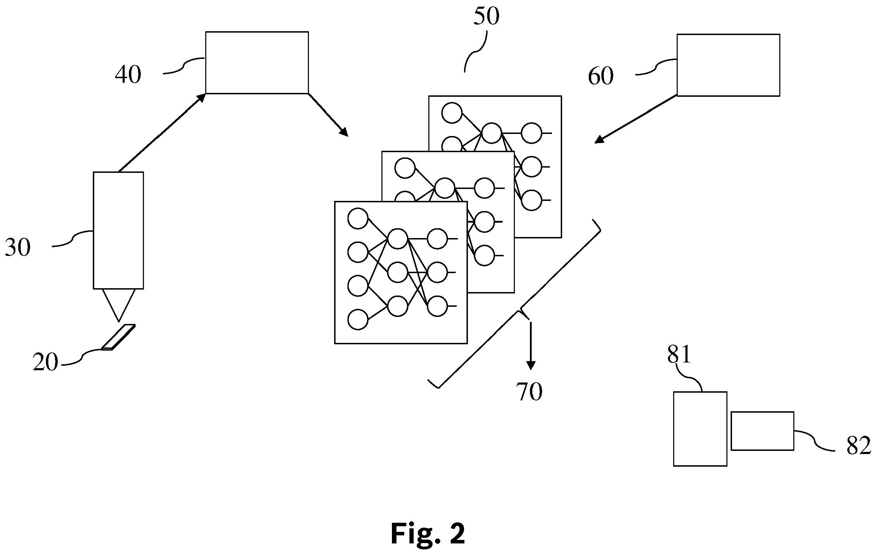

Shown in figure 2 is exemplarily a setup of a system to carry out the method according to figure 1.

A sample 20 is examined through a scanning tunneling microscope 30, and optionally with a non-local transport measurement setup. The scanning tunneling microscope 30 outputs an image 40 of the local density of states, and optionally the non-local transport measurement setup outputs non-local transport characteristics. This image 40, and optionally the non-local transport characteristics, can be inputted into the ensemble of machine learning systems, in particular the ensemble of neural networks 50. Alternatively, simulated images 60 of the local density of states, and optionally the simulated non-local transport characteristics, determined by a computer with processor 81 and a storage medium 82 can be inputted into to the machine learning system, in particular into the ensemble of neural networks 50. Depending on the outputs of the ensemble, a prediction of the absolute value of the topological invariant 70, and optionally the sign of the topological invariant, is outputted.

## Claims

1. A computer-implemented method of measurement of desired information on a topological invariant of a material (20), wherein the desired information is either a modulus or the modulus and a sign of the topological invariant, comprising:
Measuring (S24) low energy properties of said material (20);
Propagating (S25) the measured low energy properties through an ensemble of machine learning systems (50),
wherein each of the machine learning systems determines a prediction vector assigning a weight to each value in a predefined set of values for the desired information on the topological invariant and each of the machine learning systems (50) is configured to predict said weights depending on the measured low energy properties ; and
Determining a collective prediction (70) of the desired information on the topological invariant of said material depending on at least a plurality of the prediction vectors of the ensemble of the machine learning systems (50).

2. The method according to claim 1, wherein the collective prediction (70) is determined by either an averaging of the prediction vectors of the machine learning systems (50) or by a majority voting depending on the prediction vectors of the machine learning systems (50).

3. The method according to claim 1 or 2, wherein in addition to the collective prediction (70) a certainty of the collective prediction is determined depending on the prediction vectors of the machine learning systems (50).

4. The method according to claim 3, wherein collective predictions are discarded if the certainty of the collective prediction is below a predefined threshold.

5. The Method according to claim 4, wherein the predefined threshold is at least 0.5.

6. The method according to any of the proceeding claims, wherein the machine learning systems (50) are artificial neural networks, in particular convolutional neural networks, and the topological invariant is the Chern number.

7. A computer-implemented method of training an ensemble of machine learning systems (50) for predicting the value of a desired information on a topological invariant of a material, wherein the desired information is either a modulus or the modulus and a sign of the topological invariant, comprising:
Parametrizing a probability distribution which characterizes low energy physics models;
Generating (S21) a set of different numerical models by sampling models via said probability distribution;
Determining low energy properties and corresponding values of the topological invariant by the generated numerical models;
Grouping the determined low energy properties and corresponding values of the desired information on the topological invariant to a set of training data; and
Training (S22) the ensemble of the machine learning systems (50), on said training data to predict the value of the desired information on the topological invariant.

8. The method according to claim 7, wherein said numerical models fulfill a symmetry of the material of interest.

9. The method according to claims 7 or 8, wherein said numerical models are tight binding models for superconductors or insulators wherein parameters of said probability distribution characterize a bulk gap and/or a hopping amplitude and/or a pairing amplitude and/or a length-scale or a plurality thereof.

10. The method according to any of the claims 7 to 9, wherein the parameters of said probability distribution are such that a model from said probability distribution has high probability to be a Shiba lattice model.

11. The method according to any of the preceding claims, wherein said material is a topological designer system.

12. The method according to any of the preceding claims, wherein said low energy properties are a local density of states and a non-local transport characteristics and the desired information on the topological invariant is the value of the topological invariant or wherein said low energy properties is a local density of states and the desired information on the topological invariant is the absolute value of the topological invariant.

13. A computer program comprising instructions which, when the program is executed by a computer, cause the computer to carry out the method according to any one of claims 1 to 12.

14. A computer-readable medium comprising instructions which, when executed by a computer, cause the computer to carry out the method according to any one of claims 1 to 12.

15. A system comprising means (81) configured for carrying out the method according to any one of claims 1 to 12.

## Patentansprüche

1. Computerimplementiertes Verfahren zum Messen einer gewünschten Information in Bezug auf eine topologische Invariante eines Materials (20), wobei die gewünschte Information entweder ein Modul oder der Modul und ein Vorzeichen der topologischen Invariante sind, umfassend:
Messen (S24) der Niedrigenergieeigenschaften des Materials (20);
Propagieren (S25) der gemessenen Niedrigenergieeigenschaften durch ein Ensemble von Systemen des maschinellen Lernens (50),
wobei jedes der Systeme des maschinellen Lernens einen Vorhersagevektor bestimmt, der jedem Wert in einem vorgegebenen Satz von Werten für die gewünschte Information in Bezug auf die topologische Invariante eine Gewichtung zuweist, und jedes der Systeme des maschinellen Lernens (50) dazu ausgelegt ist, die Gewichtungen in Abhängigkeit von den gemessenen Niedrigenergieeigenschaften vorherzusagen; und
Bestimmen einer kollektiven Vorhersage (70) der gewünschten Information in Bezug auf die topologische Invariante des Materials in Abhängigkeit von mindestens einer Vielzahl der Vorhersagevektoren des Ensembles der Systeme des maschinellen Lernens (50).

2. Verfahren nach Anspruch 1, wobei die kollektive Vorhersage (70) entweder durch eine Mittelung der Vorhersagevektoren der Systeme des maschinellen Lernens (50) oder durch eine Mehrheitsabstimmung in Abhängigkeit von den Vorhersagevektoren der Systeme des maschinellen Lernens (50) bestimmt wird.

3. Verfahren nach Anspruch 1 oder 2, wobei zusätzlich zu der kollektiven Vorhersage (70) eine Sicherheit der kollektiven Vorhersage in Abhängigkeit von den Vorhersagevektoren der Systeme des maschinellen Lernens (50) bestimmt wird.

4. Verfahren nach Anspruch 3, wobei kollektive Vorhersagen verworfen werden, wenn die Sicherheit der kollektiven Vorhersage unter einem vorgegebenen Schwellenwert liegt.

5. Verfahren nach Anspruch 4, wobei der vorgegebene Schwellenwert mindestens 0,5 beträgt.

6. Verfahren nach einem der vorhergehenden Ansprüche, wobei die Systeme des maschinellen Lernens (50) künstliche neuronale Netzwerke, insbesondere faltungsneuronale Netzwerke, sind und die topologische Invariante die Chern-Zahl ist.

7. Computerimplementiertes Verfahren zum Trainieren eines Ensembles von Systemen des maschinellen Lernens (50) zum Vorhersagen des Werts einer gewünschten Information in Bezug auf eine topologische Invariante eines Materials, wobei die gewünschte Information entweder ein Modul oder der Modul und ein Vorzeichen der topologischen Invariante ist, umfassend:
Parametrisierung einer Wahrscheinlichkeitsverteilung, die niederenergetische physikalische Modelle kennzeichnet;
Erzeugen (S21) eines Satzes verschiedener numerischer Modelle durch Abtasten von Modellen über die Wahrscheinlichkeitsverteilung;
Bestimmen von Niedrigenergieeigenschaften und entsprechender Werte der topologischen Invariante durch die erzeugten numerischen Modelle;
Gruppieren der bestimmten Niedrigenergieeigenschaften und entsprechender Werte der gewünschten Information in Bezug auf die topologische Invariante zu einem Satz von Trainingsdaten; und
Trainieren (S22) des Ensembles der Systeme des maschinellen Lernens (50) mit den Trainingsdaten, um den Wert der gewünschten Information in Bezug auf die topologische Invariante vorherzusagen.

8. Verfahren nach Anspruch 7, wobei die numerischen Modelle eine Symmetrie des Materials von Interesse erfüllen.

9. Verfahren nach Anspruch 7 oder 8, wobei die numerischen Modelle Tight-Binding-Modelle für Supraleiter oder Isolatoren sind, wobei Parameter der Wahrscheinlichkeitsverteilung eine Bulklücke und/oder eine Hopping-Amplitude und/oder eine Paarungsamplitude und/oder eine Längenskala oder eine Vielzahl davon kennzeichnen.

10. Verfahren nach einem der Ansprüche 7 bis 9, wobei die Parameter der Wahrscheinlichkeitsverteilung derart sind, dass ein Modell aus der Wahrscheinlichkeitsverteilung eine hohe Wahrscheinlichkeit aufweist, ein Shiba-Gittermodell zu sein.

11. Verfahren nach einem der vorhergehenden Ansprüche, wobei das Material ein topologisch maßgeschneidertes System ist.

12. Verfahren nach einem der vorhergehenden Ansprüche, wobei die Niedrigenergieeigenschaften eine lokale Dichte von Zuständen und eine nicht-lokale Transportcharakteristik sind und die gewünschte Information in Bezug auf die topologische Invariante der Wert der topologischen Invariante ist oder wobei die Niedrigenergieeigenschaften eine lokale Dichte von Zuständen ist und die gewünschte Information in Bezug auf die topologische Invariante der absolute Wert der topologischen Invariante ist.

13. Computerprogramm, umfassend Anweisungen, die, wenn das Programm durch einen Computer durchgeführt wird, den Computer veranlassen, das Verfahren nach einem der Ansprüche 1 bis 12 durchzuführen.

14. Computerlesbares Medium, umfassend Anweisungen, die, wenn sie durch einen Computer durchgeführt werden, den Computer veranlassen, das Verfahren nach einem der Ansprüche 1 bis 12 durchzuführen.

15. System, umfassend Mittel (81), dazu ausgelegt, das Verfahren nach einem der Ansprüche 1 bis 12 durchzuführen.

## Revendications

1. Procédé mis en œuvre par ordinateur pour mesurer une information souhaitée sur un invariant topologique d'un matériau (20), l'information souhaitée étant soit un module, soit le module et un signe de l'invariant topologique, comprenant :
la mesure (S24) de propriétés à basse énergie dudit matériau (20) ;
la propagation (S25) des propriétés à basse énergie mesurées à travers un ensemble de systèmes d'apprentissage automatique (50),
chacun des systèmes d'apprentissage machine déterminant un vecteur de prédiction attribuant un poids à chaque valeur dans un ensemble prédéfini de valeurs pour les informations souhaitées sur l'invariant topologique et chacun des systèmes d'apprentissage machine (50) étant conçu pour prédire lesdits poids en fonction des propriétés à basse énergie mesurées ; et
la détermination d'une prédiction collective (70) de l'information souhaitée sur l'invariant topologique dudit matériau en fonction d'au moins une pluralité des vecteurs de prédiction de l'ensemble des systèmes d'apprentissage automatique (50).

2. Procédé selon la revendication 1, dans lequel la prédiction collective (70) est déterminée soit par la prise de la moyenne des vecteurs de prédiction des systèmes d'apprentissage automatique (50), soit par un vote majoritaire en fonction des vecteurs de prédiction des systèmes d'apprentissage automatique (50).

3. Procédé selon la revendication 1 ou 2 dans lequel, en plus de la prédiction collective (70), une certitude de la prédiction collective est déterminée en fonction des vecteurs de prédiction des systèmes d'apprentissage automatique (50).

4. Procédé selon la revendication 3, dans lequel des prédictions collectives sont écartées si la certitude de la prédiction collective est inférieure à un seuil prédéfini.

5. Procédé selon la revendication 4, dans lequel le seuil prédéfini est d'au moins 0,5.

6. Procédé selon l'une quelconque des revendications précédentes, dans lequel les systèmes d'apprentissage automatique (50) sont des réseaux neuronaux artificiels, en particulier des réseaux neuronaux convolutionnels, et l'invariant topologique est le nombre de Chern.

7. Procédé mis en œuvre par ordinateur pour entraîner un ensemble de systèmes d'apprentissage automatique (50) en vue de prédire la valeur d'une information souhaitée sur un invariant topologique d'un matériau, l'information souhaitée étant soit un module, soit le module et un signe de l'invariant topologique, comprenant :
le paramétrage d'une distribution de probabilité qui caractérise des modèles physiques à basse énergie ;
la génération (S21) d'un ensemble de modèles numériques différents par échantillonnage de modèles par le biais de ladite distribution de probabilité ;
la détermination de propriétés à basse énergie et de valeurs correspondantes de l'invariant topologique par les modèles numériques générés ;
le regroupement des propriétés à basse énergie déterminées et des valeurs correspondantes de l'information désirée sur l'invariant topologique dans un ensemble de données d'entraînement ; et
l'entraînement (S22) de l'ensemble des systèmes d'apprentissage automatique (50) sur lesdites données d'entraînement pour prédire la valeur de l'information souhaitée sur l'invariant topologique.

8. Procédé selon la revendication 7, dans lequel lesdits modèles numériques respectent une symétrie du matériau d'intérêt.

9. Procédé selon la revendication 7 ou 8, dans lequel lesdits modèles numériques sont des modèles de liaison forte pour supraconducteurs ou isolants, des paramètres de ladite distribution de probabilité caractérisant un espace volumique et/ou une amplitude de saut et/ou une amplitude d'appariement et/ou une échelle de longueur, ou une pluralité de ces éléments.

10. Procédé selon l'une quelconque des revendications 7 à 9, dans lequel les paramètres de ladite distribution de probabilité sont tels qu'un modèle issu de ladite distribution de probabilité a une probabilité élevée d'être un modèle de réseau de Shiba.

11. Procédé selon l'une quelconque des revendications précédentes, dans lequel ledit matériau est un système de conception topologique.

12. Procédé selon l'une quelconque des revendications précédentes, dans lequel lesdites propriétés à basse énergie sont une densité locale d'états et une caractéristique de transport non local et l'information souhaitée sur l'invariant topologique est la valeur de l'invariant topologique, ou dans lequel lesdites propriétés à basse énergie sont une densité locale d'états et l'information souhaitée sur l'invariant topologique est la valeur absolue de l'invariant topologique.

13. Programme informatique comprenant des instructions qui, lors de l'exécution du programme par un ordinateur, amènent l'ordinateur à réaliser le procédé selon l'une quelconque des revendications 1 à 12.

14. Support lisible par ordinateur comprenant des instructions qui, lors de leur exécution par un ordinateur, amènent l'ordinateur à réaliser le procédé selon l'une quelconque des revendications 1 à 12.

15. Système comprenant des moyens (81) conçus pour réaliser le procédé selon l'une quelconque des revendications 1 à 12.
